Europäisches Patentamt

European Patent Office

Office européen des brevets

(11) Veröffentlichungsnummer: **0 303 004**
**A1**

(12) **EUROPÄISCHE PATENTANMELDUNG**

(21) Anmeldenummer: 88107458.7

(22) Anmeldetag: 10.05.88

(51) Int. Cl.⁴: **B01J 23/74** , **B01J 23/86** , **B01D 53/36** , **B01J 27/053** , **B01J 37/04**

(30) Priorität: 14.08.87 DE 3727119

(43) Veröffentlichungstag der Anmeldung:
15.02.89 Patentblatt 89/07

(84) Benannte Vertragsstaaten:
AT BE CH DE ES FR GB GR IT LI LU NL SE

(71) Anmelder: DIDIER-WERKE AG
Lessingstrasse 16-18
D-6200 Wiesbaden(DE)

Anmelder: DIDIER ENGINEERING GmbH
Alfredstrasse 28 Postfach 10 09 45
D-4300 Essen 1(DE)

(72) Erfinder: Kainer, Hartmut, Dr.
Am Güldenplan 2G
D-6200 Wiesbaden(DE)
Erfinder: Bühler, Eugen, Prof. Dr.
Kastanienweg 30
D-6240 Königstein 3(DE)
Erfinder: Grimm, Daniel
Reitalle 18
D-6208 Bad Schwalbach(DE)
Erfinder: Schnelle, Wilfried, Dr.
Gabelsbornstrasse 14
D-6200 Wiesbaden(DE)
Erfinder: Flockenhaus, Claus, Prof. Dr.
Tersteegenweg 16
D-4300 Essen 1(DE)
Erfinder: Laue, Karl-Heinrich
Bergische Strasse 41
D-4320 Hattingen 16(DE)
Erfinder: Merkel, Klaus
Schönscheidtstrasse 8
D-4300 Essen 13(DE)

(74) Vertreter: Brückner, Raimund, Dipl.-Ing.
c/o Didier-Werke AG Lessingstrasse 16-18
D-6200 Wiesbaden(DE)

(54) Vefahren zur Herstellung von Katalysatoren für die Reduzierung von Stickoxiden aus Abgasen oder für chemische Luftreinigungsverfahren und nach dem Verfahren hergestellte Katalysatoren.

(57) Die Erfindung betrifft ein Verfahren zur Herstellung von Katalysatoren für die Reduzierung von Stickoxiden aus Abgasen oder für chemische Luftreinigungsverfahren, bei welchem als Hauptbestandteile Eisenoxid oder Mischungen aus Eisenoxid und Chromoxid und/oder Manganoxid, gegebenenfalls aktivierende Zusätze und Schwefelsäure und Phosphorsäure verwendet werden.

Das erfindungsgemäße Verfahren ist dadurch gekennzeichnet, daß aus den Oxiden unter Verwendung von anorganischen und/oder organischen Bindemitteln zunächst Formkörper hergestellt und diese getrocknet werden und diese Formkörper dann entweder

a) mit einer Mischung aus Schwefelsäure und Phosphorsäure behandelt und anschließend einer Temperaturbehandlung unterworfen werden, oder

b) die Formkörper zuerst mit Schwefelsäure und anschließend mit Phosphorsäure oder zuerst mit Phosphorsäure und anschließend mit Schwefelsäure behandelt und anschließend einer Temperaturbehandlung unterworfen werden.

Die nach dem erfindungsgemäßen Verfahren hergestellten Katalysatoren weisen den Vorteil auf, daß sie eine geringe Feuchtigkeitsempfindlichkeit zeigen und dennoch hohe Aktivität besitzen.

### Verfahren zur Herstellung von Katalysatoren für die Reduzierung von Stickoxiden aus Abgasen oder für chemische Luftreinigungsverfahren und nach dem Verfahren hergestellte Katalysatoren

Die Erfindung betrifft ein Verfahren zur Herstellung eines Katalysators für die Reduzierung von Stickoxiden aus Abgasen oder für chemische Luftreinigungsverfahren, bei welchem man aus Eisenoxid oder aus Mischungen aus Eisenoxid und Chromoxid und/oder Manganoxid, gegebenenfalls unter Dotierung mit aktivierenden Zusätzen, unter Anwendung von Schwefelsäure und Phosphorsäure Katalysatorformkörper herstellt, sowie nach dem Verfahren hergestellte Katalysatoren.

Es sind bereits Verfahren zur Herstellung von Katalysatoren für die Reduzierung von Stickoxiden aus Abgasen oder für chemische Luftreinigungsverfahren bekannt, wobei bei der Reduzierung von Stickoxiden aus Abgasen diesen Abgasen $NH_3$ für die chemische Reaktion der Stickoxide mit dem Ammoniak unter Bildung von Stickstoff zugesetzt wird.

Aus der DE-OS 35 31 651.9-41 sind bereits Katalysatoren für die Stickoxidreduzierung in Abgasen bekannt, welche als Hauptbestandteil ein körniges $Fe_2O_3$-Katalysatormaterial und ein Bindemittel enthalten, wobei dieses Bindemittel in einer ersten Mischung mit dem $Fe_2O_3$ Phosphorsäure und in einer zweiten Mischung mit $Fe_2O_3$ Schwefelsäure ist. Diese beiden Mischungen werden miteinander vermischt und hieraus Katalysatorplatten hergestellt. Ein Verfahren zur Herstellung ähnlicher Katalysatoren ist aus der DE-OS 35 05 648.7-41 bekannt, bei welchem Eisenoxid und Chromoxid sowie aktivierende Zusätze trocken vermischt werden, dieses trockene Gemisch mit Phosphorsäure gebunden und anschließend mit Schwefelsäure getränkt wird, woran sich eine Kalzinierung bzw. Temperbehandlung und die anschließende Herstellung der Formkörper anschließen. Aus der DE-PS 35 26 383 ist ein Verfahren zur Erzeugung von Katalysatoren für die Stickoxidreduzierung aus Abgasen bekannt, bei welchem ein katalytisch aktives Oxidgemisch aus Eisen- oder Chromerz und Verflüssiger mit Wasser und Schwefelsäure zu einem Schlicker aufbereitet wird, der auf einen mit einer ätzenden Säure vorbehandelten metallischen Träger aufgebracht wird.

Aufgabe der vorliegenden Erfindung ist die Bereitstellung eines Verfahrens zur Herstellung von Katalysatoren der zuvor genannten Art, bei welchem Katalysatoren erhalten werden, welche eine gute Feuchtigkeitsbeständigkeit bei guter Aktivität besitzen. Das Problem der Feuchtigkeitsbeständigkeit bei Katalysatoren zur Entfernung von Stickoxiden aus Abgasen ist an sich bekannt, da beim Betrieb solcher Katalysatoren bei absinkenden Temperaturen in Abgas der Taupunkt unterschritten werden kann, wodurch sich Feuchtigkeit auf den Katalysatorformkörper niederschlägt und diese zerstören kann bzw. die Katalysatorformkörper werden durch den Feuchtigkeitseinfluß unzulässig verformt.

Überraschenderweise wurde nun gefunden, daß bei der Herstellung solcher Katalysatoren zur Reduzierung von Stickoxiden in Abgasen und für chemische Luftreinigungsverfahren, welche in üblicher Weise aus Eisenoxid oder Mischungen aus Eisenoxid und Chromoxid, gegebenenfalls unter Dotierung mit an sich bekannten, aktivierenden Zusätzen hergestellt werden, eine ausgezeichnete Feuchtigkeitsbeständigkeit, d.h. Wasserfestigkeit und eine gute Aktivität erzielt werden kann, wenn Schwefelsäure und Phosphorsäure nicht entsprechend dem Stand der Technik vor dem Pressen der Formkörper, sondern erst nach der Herstellung der Katalysatorformkörper zugesetzt werden.

Das erfindungsgemäße Verfahren ist gemäß einer ersten Ausführungsform dadurch gekennzeichnet, daß man aus den Oxiden unter Verwendung von anorganischen und/oder organischen Bindemitteln die Formkörper herstellt, diese trocknet und/oder aushärtet, die erhaltenen Formkörper mit einer Mischung aus Schwefelsäure und Phosphorsäure behandelt und abschließend die getränkten Formkörper einer Temperaturbehandlung zwischen 100° C und 600° C unterwirft.

Gemäß einer zweiten Ausführungsform ist das Verfahren dadurch gekennzeichnet, daß man aus den Oxiden unter Verwendung von anorganischen und/oder organischen Bindemitteln die Formkörper herstellt, diese trocknet und/oder aushärtet, die erhaltenen Formkörper entweder zuerst mit Schwefelsäure und anschließend mit Phosphorsäure oder zuerst mit Phosphorsäure und anschließend mit Schwefelsäure behandelt und abschließend die getränkten Formkörper einer Temperaturbehandlung zwischen 100° C und 600° C unterwirft.

Gemäß einer weiteren bevorzugten Ausführungsform des erfindungsgemäßen Verfahrens wird die Schwefelsäure entweder ganz oder teilweise durch ein wasserlösliches bzw. säurelösliches Sulfat und/oder Hydrogensulfat von Ammonium oder der Metalle Eisen, Vanadium, Nickel, Molybdän, Aluminium, Mangan, Kobalt, Kupfer, Chrom ersetzt, oder es wird die Phosphorsäure ganz oder teilweise durch ein wasserlösliches Phosphat und/oder Hydrogenphosphat von Ammonium oder der Metalle Eisen, Nickel, Molybdän, Aluminium, Mangan, Chrom ersetzt. Bei dieser Ausführungsform kann daher eine beliebige Kombination verwendet werden, welche zumindest noch eine der genannten Säuren Schwefelsäure oder Phosphorsäure enthält, wobei die übrigen Bestandteile dann aus den wasserlöslichen bzw. in dem Säuregemisch löslichen Sulfat und/oder Hydrogensulfat und/oder Phosphat und/oder Hydrogenphosphat bestehen.

Bei dem erfindungsgemäßen Verfahren werden die Säure oder Salze in Form der zuvorgenannten Sulfate, Hydrogensulfate, Phosphate oder Hydrogenphosphate in solchen Mengen verwendet, daß das Verhältnis von Sulfat zu Phosphat im Bereich von 1000 : 1 bis 1 : 1000 und vorzugsweise im Bereich von 10 : 1 bis 1 : 10 liegt, wobei dieses Verhältnis das Gewichtsverhältnis ist.

Gemäß einer weiteren bevorzugten Ausführungsform wird die abschließende Temperaturbehandlung bei dem erfindungsgemäßen Verfahren zunächst als Trocknungsbehandlung zwischen 110°C und 250°C durchgeführt, und nach dem Trocknen erfolgt eine Temperbehandlung bis zu einer Maximaltemperatur im Bereich von 250°C bis 600°C, vorzugsweise bei einer Maximaltemperatur von 350°C bis 450°C.

Gemäß einer weiteren bevorzugten Ausführungsform erfolgt die Temperaturerhöhung bei dieser Temperbehandlung bis auf die Maximaltemperatur, d.h. von der maximalen Trocknungstemperatur bis zur maximalen Temperatur, mit einer Temperatursteigerungsrate zwischen 5°C/h und 200°C/h.

Vorzugsweise wird die Maximaltemperatur der Temperbehandlung während 2 bis 24 Stunden aufrechterhalten und die Formkörper anschließend auf Umgebungstemperatur abkühlen gelassen.

Bei dem erfindungsgemäßen Verfahren werden als Hauptbestandteile des Katalysators Eisenoxid oder Mischungen oder Eisenoxid und Chromoxid und/oder Manganoxid verwendet. Unter dem Ausdruck Eisenoxid und Chromoxid und/oder Manganoxid sind hier auch Eisenerze bzw. Chromerze bzw. Manganerze mit hohen Gehalten an $Fe_2O_3$ bzw. $Fe_3O_4$ und $Cr_2O_3$, Manganoxiden zu verstehen. Es müssen daher nicht die reinen Oxide verwendet werden. Die Oxide bzw. Erze werden üblicherweise in geeignet zerkleinerter Form eingesetzt, z.B. Korngrößen < 1 - 2 mm. Bei dem erfindungsgemäßen Verfahren werden dem Eisenoxid bzw. der Mischung aus Eisenoxid und Chromoxid und/oder Manganoxid vorteilhafterweise aktivierende Zusätze zudotiert. Bei diesen Zusätzen kann es sich um an sich bekannte Dotierungen handeln, die entweder in Form der Elemente, der Oxide oder anderer geeigneter Salze eingesetzt werden. Beispiele für solche dotierenden Elemente sind Vanadium, Kupfer, Kobalt, Uran, Wolfram, Nickel, Molybdän, Mangan, Zinn, Zink, Beryllium, Bor, Yttrium, Niob, Antimon, Wismuth, Silber sowie Elemente der seltenen Erden in Form von Oxiden oder Hydroxiden. Bei den erfindungsgemäßen Katalysatoren können ebenfalls Oxide oder Hydroxide des Magnesiums, Aluminiums und Siliziums entweder in den Ausgangsmaterialien als Verunreinigungen vorliegen oder auch absichtlich zugesetzt werden.

Bei dem erfindungsgemäßen Verfahren können anorganische und/oder organische Bindemittel zur Herstellung der Katalysatorformkörper verwendet werden. Beispiele für solche anorganischen Bindemittel sind Tone, insbesondere Bindetone, Kaoline, Al-haltige Verbindungen wie Aluminiumhydroxid und Aluminiumhydroxychlorid, magnesium- oder calciumhaltige Verbindungen, wie Zemente, z.B. Sorel-Zemente, Calciumaluminat- oder Calciumsilikat-Zemente, gegebenenfalls mit feinkörnigem $SiO_2$, oder Gemische dieser Stoffe.

Als organische Bindemittel können bei dem erfindungsgemäßen Verfahren die organischen Bindemittel verwendet werden, die auf dem Feuerfestgebiet an sich bekannt sind. Beispiele für solche organischen Bindemittel sind Zelluloseether, Schmelzkleber, Sinterpulver, Phenolharze, z.B. Phenolnovolake, wobei hier geeignete Härter, z.B. Hexamethylentetramin, verwendet werden können, sowie modifizierte Furanharze, z.B. Furfurylalkoholharze, die ebenfalls mit einem geeigneten Härter, z.B. Hexymethylentetramin, eingesetzt werden.

Neben den anorganischen und/oder organischen Bindemitteln können wahlweise auch noch andere Zusatzstoffe zu dem Ausgangsgemisch für die Herstellung der Katalysatorformkörper zugesetzt werden, welche ebenfalls eine Bindemittelwirkung ausüben können oder bei der späteren Behandlung mit den Säuren reagieren und Sulfate oder Phosphate bilden, die die Festigkeit der letztlich erhaltenen Katalysatoren wesentlich erhöhen. Beispiele für solche Zusatzstoffe sind: Olivin, Talkum, Metallhydroxide oder Carbonate oder Hydrogencarbonate, z.B. von Mg, Al, Fe, Ca, und feinteiliges $SiO_2$.

Die Verfahrensschritte zur Herstellung eines erfindungsgemäßen Katalysators sind an sich bekannt. Hierzu werden die Ausgangsmaterialien zusammen mit den gegebenenfalls eingesetzten aktivierenden Zusätzen und dem Bindemittel sowie gegebenenfalls einer geringen Menge einer Flüssigkeit, entweder Wasser oder einem organischen Lösungsmittel wie einem Alkohol, zu einer homogenen Mischung in einem geeigneten Mischer vermischt und hieraus die gewünschten Formkörper gepreßt, wobei diese Formkörper sowohl mit einer Stempelpresse geformt werden können, als auch isostatisch oder stranggepreßt werden können, oder auch ausgewalzt werden können.

Anschließend werden diese grünen Formkörper zur beschleunigten Härtung der Bindung entweder nur getrocknet, z.B. im Fall der alleinigen Verwendung von anorganischen Bindemitteln, oder sie werden einer für die Aushärtung bei Verwendung von organischen Bindemitteln ausreichenden Temperatur für die erforderliche Zeitspanne ausgesetzt. Die Trocknung bei Verwendung von anorganischen Bindemitteln erfolgt üblicherweise im Bereich zwischen 100 und 150°C, während bei alleiniger Verwendung oder Mitverwendung von organischen Bindemitteln die Temperatur üblicherweise im Bereich zwischen 150°C und 250°C liegt.

Nach der Trocknung bzw. Aushärtung der Formkörper werden diese der Behandlung mit Schwefelsäure und Phosphorsäure, entweder einer gemeinsamen Mischung dieser beiden Säuren oder zuerst der Behandlung mit Schwefelsäure und dann der Behandlung mit Phosphorsäure oder zuerst der Behandlung mit Phosphorsäure und dann der Behandlung mit Schwefelsäure unterzogen. Diese Behandlung kann eine Tränkbehandlung sein, d.h. die Formkörper werden in die Säuremischung oder in die einzelnen Säuren nacheinander eingetaucht, oder die Säuremischung oder die einzelnen Säuren können auch auf die Formkörper aufgesprüht oder aufgestrichen werden. FAlls die Formkörper getränkt werden, beträgt die Tränkzeit im allgemeinen zwischen 3 und 100 Sekunden, was von den Abmessungen, insbesondere der Wandstärke der Formkörper abhängig ist.

Anschließend werden die mit den Säuren bzw. den entsprechenden Salzen behandelten Formkörper getrocknet, üblicherweise während 1 bis 4 Stunden bei einer Temperatur zwischen 110 und 250°C, und nach Abschluß der Trocknung, d.h. der Entfernung gasförmiger und flüchtiger Bestandteile, erfolgt die Temperbehandlung der Formkörper, wobei eine vorteilhafte Temperatursteigerungsrate 10°C/h bis 200°C/h beträgt. Die Formkörper werden üblicherweise während einer gewissen Zeit zwischen 2 und 24 Stunden auf der Maximaltemperatur der Temperbehandlung gehalten.

Anschließend werden die Formkörper abkühlen gelassen und sind dann einsatzfertig. Vorzugsweise erfolgt das Tempern in einer Atmosphäre mit reduziertem $O_2$-Gehalt, z.B. 0,5 - 10 % $O_2$, vorzugsweise 2 - 4 % $O_2$. Die Erfindung wird anhand der folgenden Beispiele näher erläutert, wobei die Beispiele 1 bis 7 die Herstellung der Katalysatorformkörper und die Beispiele 8 bis 21 die Behandlung dieser Formkörper mit den Säuren betreffen.

Beispiel 1

1,95 kg Eisenerz mit 95 % $Fe_2O_3$, Rest $SiO_2$, FeO, $Al_2O_3$, einer Rohdichte von 3,6 $g/cm^3$ und einer Gesamtporosität von > 15 Vol.-% mit einer Korngröße von 0,09 - 1,0 mm und 0,6 kg desselben Eisenerzes mit einer Körnung von 0 - 0,09 mm sowie 0,3 kg Chromerz mit einem Gehalt von 50 %

$Cr_2O_3$, Rest MgO, $Fe_2O_3$, $SiO_2$, $Al_2O_3$, wurden homogen in einem Turbulenzmischer mti 0,15 kg Bindeton und 0,06 kg Aluminiumhydroxid vermischt. Dann wurden 0,3 kg eines modifizierten Furanharzes in Furfurylalkohol und 18 g Hexamethylentetramin zugesetzt und homogen eingearbeitet. Aus dieser Mischung wurden Formkörper mit den Abmessungen von 150 x 150 x 2,4 mm unter einem Druck von 40 $N/mm^2$ gepreßt. Zur Trocknung und zur Aushärtung der Bindung wurden die Formkörper auf eine Temperatur von 180°C wähend 0,5 h erwärmt.

Beispiel 2

1,95 kg des in Beispiel 1 verwendeten Eisenerzes mit einer Körnung von 0,09 - 1,0 mm und 0,9 kg desselben Eisenerzes mit einer Körnung von 0 - 0,09 mm, 0,15 kg des in Beispiel 1 verwendeten Bindetons sowie 0,06 kg Olivin-Mehl und 0,06 kg eines pulverförmigen Phenol-Novolakes mit 9 % Hexamethylentetramin wurden in einem Mischer gründlich vermischt. Anschließend wurden 80 ml Wasser eingearbeitet. Es wurden Formkörper mit den in Beispiel 1 angegebenen Abmessungen unter denselben Bedingungen durch Pressen hergestellt, diese wurden unter den in Beispiel 1 angegebenen BEdingungen getrocknet und ausgehärtet.

Beispiel 3

1,95 kg des in Beispiel 18 verwendeten Eisenerzes mit einer Körnung von 0,09 - 1,0 mm and 0,9 kg desselben Eisenerzes mit einer Körnung von 0 - 0,09 mm, 0,15 kg der in Beispiel 1 verwendeten Bindetons, 0,03 kg eines $SiO_2$-Sols und 0,06 kg eines pulverförmigen Phenol-Novolakes mit 9 % Hexamethylentetramin wurden in einem Mischer gründlich vermischt. Anschließend wurden 80 ml einer 10 %igen Monoaluminiumphosphatlösung eingearbeitet. Es wurden Formkörper mit den in Beispiel 18 angegebenen Abmessungen unter denselben Bedingungen durch Pressen hergestellt, diese wurden unter den in Beispiel 18 angegebenen Bedingungen getrocknet und ausgehärtet.

Beispiel 4

Die Arbeitsweise von Beispiel 1 wurde wiederholt, wobei das Eisenerz mit der Körnung von 0 - 0,09 mm zuvor mit 0,15 kg Vanadiumpentoxid in einer Kugelschwingmühle intensiv vermischt worden war. Dieses mit Vanadinpentoxid behandelte Eisenerz wurde dann bei der Herstellung der Katalysatorformkörper eingesetzt.

Beispiel 5

Die Arbeitsweise von Beispiel 2 wurde wiederholt, wobei das Eisenerz mit einer Körnung von 0 - 0,09 mm und der Bindeton zuvor mit 0,15 kg Nioboxid in einer Kugelschwingmühle intensiv vermischt worden waren. Diese Vormischung wurde dann bei der Herstellung der Katalysatorformkörper eingesetzt.

Beispiel 6

1,95 kg des in Beispiel 1 verwendeten Eisenerzes mit einer Körnung von 0,09 - 1,0 mm und 0,9 kg desselben Eisenerzes mit einer Körnung von 0 - 0,09 mm, 0,15 kg Bindeton und 0,03 kg MgO wurden in einem Mischer homogen vermischt. Anschließend wurden in den Mischer 80 ml Wasser eingearbeitet. Aus dieser Mischung wurden entsprechend der Arbeitsweise von Beispiel 1 Formkörper hergestellt, welche bei 120 ˚C getrocknet wurden. Diese getrockneten Formkörper wurden dann für 10 sec in einer 30 %igen Lösung von Aluminiumhydroxidchlorid eingetaucht und erneut bei 120 ˚C getrocknet.

Beispiel 7

2,1 kg des in Beispiel 1 verwendeten Eisenerzes mit einer Körnung von 0 - 0,09 mm und 0,75 kg desselben Eisenerzes mit einer Körnung von 0,09 - 0,2 mm, 0,03 kg Bindeton und 0,12 g Talkum sowie 0,09 kg eines Celluloseethers, der als organisches Bindemittel und als Plastifizierungsmittel diente, sowie 0,015 kg eines puvlerförmigen Phenol-Novolakes mit ca. 9 % Hexamethylentetramin und 450 ml Wasser wurden in einem Knetmischer zu einer plastischen Masse homogen vermischt. Durch Auswalzen wurden Formkörper mit den Abmessungen 150 x 150 x 2,4 mm und durch Strangpressen Formkörper mit den Abmessungen 50 x 50 x 500 mm mit wabenförmigem Querschnitt hergestellt. Die Formkörper wurden 24 Stunden an der Luft vorgetrocknet, anschließend 24 Stunden bei 110 ˚C zur Entfernung der Wassers und 0,5 h bei 180 ˚C zum Aushärten des organischen Bindemittels gehalten.

Beispiel 8

1,5 kg des in Beispiel 1 verwendeten Eisenerzes mit einer Körnung von 0 - 0,09 mm und 0,75 kg desselben Eisenerzes mit einer Körnung von 0,09 - 0,2 mm, 0,6 kg des in Beispiel 1 verwendeten Chromerzes mit einer Körnugn von 0 - 0,09 mm, 0,03 kg Bindeton, 0,12 kg Talkum, 0,15 kg Vanadiumpentoxid, 0,06 kg Aluminiumhydroxid, 0,09 kg eines Celluloseethers und 0,15 kg eines modifizierten Furanharzes mit Furfurylalkohol und 9 g Hexamethylentetramin sowie 400 ml Wasser wurden in einem Knetmischer zu einer plastischen Masse homogen vermischt. Die Verarbeitung der Masse und die Trocknung der Formkörper erfolgte nach der Arbeitsweise von Beispiel 6.

Beispiel 9

1,2 kg des in Beispiel 18 verwendeten Eisenerzes mit einer Körnung von 0 - 0,09 mm und 0,75 kg desselben Eisenerzes mit einer Körnung von 0,09 - 0,2 mm, 0,9 kg Manganerz mit 30 % $MnO_2$, Rest $Fe_2O_3$, $Al_2O_3$, $SiO_2$, CaO und einer Gesamtporosität größer 30 Vol.-% mit einer Korngröße 0 - 0,09 mm, 0,03 kg Bindeton, 0,12 kg Talkum, 0,09 kg eines Celluloseethers und 0,015 kg eines pulverförmigen Phenol-Novolakes mit ca. 9 % Hexamethylentetramin und 450 ml Wasser wurden in einem Knetmischer zu einer plastischen Masse homogen vermischt. Die Verarbeitung der Masse und die Trocknung der Formkörper erfolgte nach der Arbeitsweise von Beispiel 24.

Beispiel 10

Der in Beispiel 1 hergestellte Katalysatorformkörper wurde in einem Säurebad der folgenden Zusammensetzung während 15 Sekunden durch Eintauchen getränkt, anschließend wurde der Formkörper 2 h bei 200 ˚C getrocknet und dann mit einer Aufheizgeschwindigkeit von 10 ˚C/h auf 450 ˚C für die Temperbehandlung erhitzt. Nach einer Haltezeit von 5 h wurde der Formkörper auf Umgebungstemperatur ausgekühlt und ergab einen feuchtigkeitsbeständigen Katalysator guter Aktivität. Die Temperbehandlung erfolgte in einer Atmosphäre mit 5 % $O_2$.
Mischung aus
25 % Schwefelsäure 95 %ig
25 % Phosphorsäure 70 %ig
50 % Wasser

Beispiel 11

Der in Beispiel 2 hergestellte Katalysatorformkörper wurde mit der folgenden Mischung getränkt:

Mischung aus
25 % Schwefelsäure 95 %ig
25 % Monoaluminiumphosphat 50 %ig

50 % Wasser

Die Trocknungs- und Temperbehandlung erfolgte wie in Beispiel 10.

Beispiel 12

Der in Beispiel 4 hergestellte Katalysatorformkörper wurde mit der folgenden Mischung besprüht, bis Tropfen der Mischung von seiner Oberfläche abliefen:

Mischung aus
25 % Schwefelsäure 95 %ig
5 % Phosphorsäure 70 %ig
20 % Monochromphosphatlösung
50 % Wasser

Die Trocknungs- und Temperbehandlung erfolgte wie in Beispiel 10.

Beispiel 13

Der in Beispiel 5 hergestellte Katalysatorformkörper wurde zunächst in einer Lösung von 50 %iger Schwefelsäure getränkt, anschließend aus der Schwefelsäurelösung entnommen, abtropfen gelassen und nach 10 Minuten in eine 4 %ige wässrige Lösung von Ammoniumhydrogenphosphat eingetaucht, herausgenommen, abtropfen gelassen und anschließend bei 180 °C während 2 h getrocknet und dann der in Beispiel 10 beschriebenen Temperbehandlung unterzogen.

Beispiel 14

Der in Beispiel 6 hergestellte Katalysatorformkörper wurde mit folgender Säurelösung durch Eintauchen behandelt:

Mischung aus
25 % Schwefelsäure 95 %ig
25 % Phosphorsäure 70 %ig
49 % Wasser
+ 1% Aluminiumhydroxid.

Die Trocknungs- und Temperbehandlung erfolgte wie in Beispiel 10.

Beispiele 15 bis 22

Die Arbeitsweise von Beispiel 10 wurde wiederholt, wobei die dort beschriebene Säuremischung verwendet wurde, welche in der folgenden Tabelle aufgeführten Zusätze enthielt:

Beispiele:

15 Säuremischung von Bsp.10 + 4,0 % Eisen(II)-sulfat-heptahydrat
16 Säuremischung von Bsp.10 + 4,0 % Eisen(III)-sulfat
17 Säuremischung von Bsp.10 + 5,0 % Vanadium(IV)oxysulfat-pentahydrat
18 Säuremischung von Bsp.10 + 0,1 % Nickeloxid
19 Säuremischung von Bsp.10 + 0,1 % Molybdän(VI-oxid)
20 Säuremischung von Bsp.10 + 4,0 % Aluminiumsulfathydrat
21 Säuremischung von Bsp.10 + 0,5 % Mangan(II)-sulfat-monohydrat
22 Säuremischung von Bsp.10 + 1,0 % Eisenpulver

Beispiel 23

Der in Beispiel 7 hergestellte Formkörper wurde mit folgender Lösung getränkt und entsprechend der Arbeitsweise von Beispiel 10 weiterbehandelt:

Mischung aus
70 % Phosphorsäure 85 %ig
30 % Wasser
+ 4,0 % Eisen(II)-sulfat-heptahydrat
+ 4,0 % Aluminiumsulfathydrat

Die in den Beispielen 10 bis 23 hergestellten Katalysatoren wiesen ebenfalls eine gute Feuchtigkeitsbeständigkeit und gute Aktivität bei der Reduzierung von Stickoxiden in Abgasen unter Zusatz von Ammoniak auf.

Die Feuchtigkeitsbeständigkeit der fertigen Katalysatorformkörper kann dadurch festgestellt werden, daß die Katalysatorformkörper in ein Gefäß mit Wasser eingesetzt werden. Ein feuchtigkeitsbeständiger Formkörper bleibt für mindestens 24 Stunden formstabil und behält weitestgehend seine Festigkeit bei. Ein nicht feuchtigkeitsbeständiger Formkörper zerfällt in dem Wasser in weniger als 24 Stunden.

**Ansprüche**

1. Verfahren zur Herstellung eines Katalysators für die Reduzierung von Stickoxiden aus Abgasen oder für chemische Luftreinigungsverfahren, bei welchem man aus Eisenoxid oder aus Mischungen aus Eisenoxid und Chromoxid und/oder Manganoxid, gegebenenfalls unter Dotierung mit aktivierenden Zusätzen, unter Anwendung von Schwefelsäure und Phosphorsäure Katalysatorformkörper herstellt,
dadurch gekennzeichnet,
daß man aus den Oxiden unter Verwendung von anorganischen und/oder organischen Bindemitteln die Formkörper herstellt, diese trocknet und/oder aushärtet, die erhaltenen Formkörper mit einer Mischung aus Schwefelsäure und Phosphorsäure behandelt und abschließend die getränkten Formkörper einer Temperaturbehandlung zwischen 100° C und 600° C unterwirft.

2. Verfahren zur Herstellung eines Katalysators für die Reduzierung von Stickoxiden aus Abgasen oder für chemische Luftreinigungsverfahren, bei welchem man aus Eisenoxid oder aus Mischungen aus Eisenoxid und Chromoxid und/oder Manganoxid, gegebenenfalls unter Dotierung mit aktivierenden Zusätzen, unter Anwendung von Schwefelsäure und Phosphorsäure Katalysatorformkörper herstellt,
dadurch gekennzeichnet,
daß man aus den Oxiden unter Verwendung von anorganischen und/oder organischen Bindemitteln die Formkörper herstellt, diese trocknet und/oder aushärtet, die erhaltenen Formkörper entweder zuerst mit Schwefelsäure und anschließend mit Phosphorsäure oder zuerst mit Phosphorsäure und anschließend mit Schwefelsäure behandelt und abschließend die getränkten Formkörper einer Temperaturbehandlung zwischen 100° C und 600° C unterwirft.

3. Verfahren nach Anspruch 1 oder 2,
dadurch gekennzeichnet,
daß man die Schwefelsäure ganz oder teilweise durch ein wasserlösliches bzw. säurelösliches Sulfat und/oder Hydrogensulfat von Ammonium, Eisen, Vanadium, Nickel, Molybdän, Aluminium, Mangan, Kupfer, Kobalt, Chrom ersetzt, und/oder daß man die Phosphorsäure ganz oder teilweise durch ein wasserlösliches bzw. säurelösliches Phosphat und/oder Hydrogenphosphat von Ammonium, Eisen, Nickel, Molybdän, Aluminium, Mangan, Kupfer, Kobalt, Chrom ersetzt.

4. Verfahren nach einem der vorhergehenden Ansprüche,
dadurch gekennzeichnet,
daß man die Säuren oder Salze in solchen Mengen verwendet, daß das Verhältnis von $SO_4^{-2}$ zu $PO_4^{-3}$ bzw. $HSO_4^-$ zu $HPO_4^{-2}$ oder $HSO_4^-$ zu $H_2PO_4^-$ im Bereich von 100 : 1 bis 1 : 100 liegt.

5. Verfahren nach Anspruch 4,
dadurch gekennzeichnet,
daß das Verhältnis im Bereich von 10 : 1 bis 1 : 10 liegt.

6. Verfahren nach einem der vorhergehenden Ansprüche,
dadurch gekennzeichnet,
daß die Temperaturbehandlung zunächst bei 110° C bis 250° C als Trocknungsbehandlung und nach dem Trocknen bei 250° C bis 600° C als Temperbehandlung durchgeführt wird.

7. Verfahren nach Anspruch 6,
dadurch gekennzeichnet,
daß die Temperbehandlung bei einer Maximaltemperatur zwischen 350° C und 450° C durchgeführt wird.

8. Verfahren nach Anspruch 7,
dadurch gekennzeichnet,
daß eine Aufheizgeschwindigkeit bei der Temperbehandlung zwischen 5° C/h und 200° C/h eingehalten wird.

9. Verfahren nach einem der vorhergehenden Ansprüche,
dadurch gekennzeichnet,
daß man als anorganisches Bindemittel Tone, Kaoline, Al-haltige Verbindungen wie Aluminiumhydroxid oder Aluminiumhydroxychlorid, magnesiumoder calciumhaltige Verbindungen, wie Zemente, gegebenenfalls mit feinkörnigem $SiO_2$ oder ein Gemisch hiervon verwendet.

10. Verfahren nach Anspruch 9,
dadurch gekennzeichnet,
daß man als die Bindemittelwirkung erhöhende Zusatzstoffe Olivin, Talkum, Metallhydroxide oder Carbonate oder Hydrogencarbonate von Mg, Al, Fe, Ca und gegebenenfalls feinteiliges $SiO_2$ verwendet.

11. Verfahren nach einem der vorhergehenden Ansprüche,
dadurch gekennzeichnet,
daß man die Oxide von Fe, Cr und/oder Mn mit einer Korngröße kleiner 0,2 mm und vorzugsweise kleiner 0,09 mm und die verwendeten aktivierenden Zusätze sowie gegebenenfalls die festen Bindemittel vor dem Vermischen mit den übrigen Bestandteilen der Mischung homogen miteinander vermischt.

12. Verfahren nach einem der vorhergehenden Ansprüche,
dadurch gekennzeichnet,
daß die Formkörper nach ihrer Herstellung und Trocknung und/oder Aushärtung von der Säurebehandlung mit einer Lösung von Aluminiumhydroxidchlorid getränkt und dann erneut getrocknet werden.

13. Verfahren nach einem der vorhergehenden Ansprüche,
dadurch gekennzeichnet,
daß man die Temperbehandlung in einer Atmosphäre mit reduziertem $O_2$-Gehalt, insbesondere mit 0,5 - 10 Vol.-% $O_2$, durchführt.

14. Verfahren nach Anspruch 13,
dadurch gekennzeichnet,
daß man die Temperbehandlung bei einem Gehalt von 2 - 4 Vol.-% $O_2$ in der Temperatmosphäre durchführt.

15. Verfahren nach einem der vorhergehenden Ansprüche,
dadurch gekennzeichnet,
daß man statt oder zusammen mit den anorganischen Bindemitteln organische Bindemittel verwendet.

16. Verfahren nach Anspruch 15,
dadurch gekennzeichnet,
daß man als organische Bindemittel Pulverharze, Schmelzkleber, Sinterpulver, Furanharze, modifizierte Furfurylalkoholharze oder Phenol-Formaldehydharze verwendet.

17. Katalysator für die Reduzierung von Stickoxiden aus Abgasen oder für chemische Luftreinigungsverfahren, hergestellt nach dem Verfahren nach einem der vorhergehenden Ansprüche.

Europäisches
Patentamt

**EUROPÄISCHER RECHERCHENBERICHT**

Nummer der Anmeldung

EP 88 10 7458

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 218 014 (DIDIER ENGINEERING)<br>* Ansprüche 1-3; Seite 3, Zeilen 21-23;<br>Seite 1, Zeilen 3-13 * | 1,4-7,<br>17 | B 01 J 23/74<br>B 01 J 23/86 |
| Y | | 2,3 | B 01 D 53/36<br>B 01 J 27/188 |
| | --- | | B 01 J 27/053 |
| Y | EP-A-0 214 380 (DIDIER ENGINEERING)<br>* Ansprüche * | 2 | B 01 J 37/04 |
| | --- | | |
| Y | DE-A-2 552 003 (UBE INDUSTRIES)<br>* Anspruch 8 * | 3 | |
| | --- | | |
| X | EP-A-0 231 437 (DIDIER ENGINEERING)<br>* Seite 3, Zeilen 25-28 * | 1,9,17 | |
| | ----- | | |

**RECHERCHIERTE SACHGEBIETE (Int. Cl.4)**

B 01 J
B 01 D

Der vorliegende Recherchenbericht wurde für alle Patentansprüche erstellt

| Recherchenort | Abschlußdatum der Recherche | Prüfer |
|---|---|---|
| DEN HAAG | 01-07-1988 | THION M.A. |